# EUROPÄISCHE PATENTANMELDUNG

(11) **EP 0 783 027 A2**
(43) Veröffentlichungstag der Anmeldung: **09.07.1997**
(21) Anmeldenummer: 96119263.0
(22) Anmeldetag: 02.12.1996
(51) Int. Cl.: C08L 91/00

(54) **Stabile wässrige Wachsdispersionen**

(30) Priorität: 11.12.1995 DE 19546073
(71) Anmelder: HOECHST AKTIENGESELLSCHAFT, 65929 Frankfurt am Main (DE)
(72) Erfinder: Kainz, Hans Jürgen, 86356 Neusäss (DE)

(57) **Zusammenfassung**

Die vorliegende Erfindung bezieht sich auf stabile wäßrige Wachsdispersionen, enthaltend
A) 5 bis 65 Gew.-% mikronisiertes Wachs und
B) 0,01 bis 7 Gew.-% polymerer Kohlenhydratderivate als Dispergiermittel.

Bei den Wachsen handelt es sich um Amid-, Montan- und Polyethylenwachse, als Kohlenhydratderivate sind insbesondere Celluloseether geeignet.
Diese Wachsdispersionen sind geeignet für die Herstellung von Auto-, Schuh-, Fußboden- und Steinpflegemitteln, Ziehmitteln, wäßrigen Holzlasuren, Druckfarben und Lacken, zur Lederbehandlung, in der Papierherstellung sowie als Trennmittel.

## Beschreibung

Wäßrige Wachsdispersionen spielen eine wichtige Rolle bei der Herstellung von Auto-, Schuh-, Fußboden- und Steinpflegemitteln, Ziehmitteln, wäßrigen Holzlasuren, kosmetischen Zubereitungen und Zahnpasten, Druckfarben und Lacken, zur Lederbehandlung, in der Papierherstellung, in der Kunststoffverarbeitung sowie als Trennmittel.

Die Herstellung wäßriger Amid-, Montan- oder Polyolefinwachsdispersionen, auch als Wachsemulsionen bezeichnet, erfolgt nach bekannten Methoden. Im geschmolzenen Zustand wird das Wachs mit geeigneten Tensiden (Emulgatoren) versetzt und unter Rühren in heißes Wasser eingetragen, wobei das Wachs unter Einwirkung des Tensides dispergiert bleibt.

Um eine Dispergierung zu erzielen, werden die Montan- und Polyolefinwachse mit hydrophilen Gruppen wie Hydroxy-, Keto- oder Carboxylatgruppen versehen. Diese Funktionalisierung kann beispielsweise durch Luftoxidation von Polyolefinwachsen oder durch Chromsäureoxidation von Montanwachsen mit anschließender Veresterung mit mehrwertigen Alkoholen erzielt werden.

Die Dispergierung kann auch bei erhöhter Temperatur unter Druck durchgeführt werden, sofern die Schmelztemperatur des Wachses über dem Siedepunkt des Wassers liegt. Durch rasches Abkühlen deutlich unterhalb des Schmelzbereiches des Wachses wird die Dispersion stabilisiert. Die erhaltene Wachsemulsion oder -dispersion hat in der Regel Teilchengrößen im Bereich 50 bis 300 Nanometer.

Neben den bekannten Polyolefin- und Montanwachsen (siehe z.B. Römpp Chemielexikon, 9. Auflage, S. 2849 und S. 3559) gibt es Amidwachse mit chemisch andersartigem Aufbau, z. B. Bis-stearyl- bzw. -palmitoyl-ethylen-diamin, Handelsname z. B. Hoechst-Wachs C®, welches sich bis jetzt der Emulgierbarkeit nach oben beschriebener Methode entzogen hat. Zwar kann durch Zusatz eines sogenannten 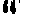 Trägerwachses 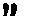 , z. B. hochoxidiertes Fischer-Tropsch-Wachs oder eines hochoxidierten Polyethylenwachses, eine Dispersion hergestellt werden, die technischen Eigenschaften der Mischung sind gegenüber dem reinen Hoechst-Wachs C® soweit verändert, daß eine Anwendung in bestimmten Bereichen nicht mehr in Frage kommt. Amidwachse im Sinne dieser Erfindung sind beispielsweise Wachse aus C₁₂- bis C₁₈-Fettsäuren mit Ammoniak, aliphatischen oder cycloaliphatischen Aminen R-NH₂ mit 12 bis 20 C-Atomen, z.B. Cocos- oder Stearylamid oder mit linearen oder verzweigten aliphatischen oder cycloaliphatischen Diaminen mit 2 bis 12 C-Atomen, z.B. Ethylendiamin, Hexamethylendiamin, Cyclohexyldiamin oder TCD-Diamin (Tetracyclodecan, C₁₂H₂₂N₂).

Für bestimmte Einsatzgebiete, z.B. für wasserbasierende Druckfarben oder wasserbasierende Lacke, werden Dispersionen aus Amid-, Montan- oder Polyolefinwachsen benötigt, wobei der Wachskörper die oben erwähnten funktionellen Gruppen enthalten oder auch frei von funktionellen Gruppen sein kann.

Polyolefinwachsdispersionen auf Lösemittelbasis sind bekannt und seit längerem in Gebrauch. Diese werden entweder durch rasches Abkühlen des im heißen organischen Lösemittel gelösten Wachses hergestellt, oder durch Dispersion des mikronisierten Polyolefinwachses im kalten organischen Lösemittel, wobei die Teilchengröße der dispergierten oder mikronisierten Wachse im Bereich von 1 bis 50 Mikrometer liegt.

In der DE-A-43 30 342 werden wäßrige Polyolefinwachsdispersionen beschrieben, wobei das Wachs eine Säurezahl von kleiner 5 mg KOH/g Wachs hat und somit also funktionelle Gruppierungen aufweist. Der zur Dispergierung des mikronisierten Wachses erforderliche hohe Zusatz von bis zu 20% eines speziellen Tensides kann sich nachteilig auf die anwendungstechnische Eigenschaften des präparierten Fertigproduktes auswirken.

Seit längerem bekannt ist auch die Verwendung von lösemittelhaltigen Dispersionen, die mikronisiertes Amidwachs enthalten, wobei die Teilchengröße der Wachspartikel deutlich mehr als 1 Mikrometer beträgt. Diese lösemittelhaltigen Wachsdispersionen werden u. a. in lösemittelhaltigen Lacken als Mattierungsmittel oder in lösemittelhaltigen Druckfarben als Scheuerschutz verwendet.

Die Einarbeitung des mikronisierten Wachses in wasserbasierende Lacke und Druckfarben oder ähnliche wasserbasierende Systeme ist aufgrund unzureichender Benetzbarkeit schwierig. Außerdem ist die mit der Einarbeitung verbundene Staubentwicklung lästig, gefährlich und gesundheitsschädlich. Bei mikronisierten Polyolefinwachsen, welche keine funktionellen Gruppen aufweisen, wird überhaupt keine Benetzbarkeit in reinem Wasser festgestellt.

Aufgabe der vorliegenden Erfindung war es, stabile wäßrige Amid-, Montan- oder Polyolefinwachsdispersionen frei von Lösemittel bereit zu stellen. Die Dispersion soll unter anderem auf nicht funktionalisiertem Polyolefinwachs basieren. Das erforderliche Dispergiermittel soll schon in geringer Konzentration wirksam sein, um Störungen im Fertigprodukt auszuschließen. Außerdem soll die Dispersion wahlweise in Kontakt mit Lebensmitteln gemäß den Empfehlungen des Gesundheitsamts zugelassen sein.
Es wurden nun stabile wäßrige Wachsdispersionen gefunden, die
A) 5 bis 65 Gew.-% mikronisiertes Wachs und
B) 0,01 bis 7 Gew.-% polymere Kohlenhydratderivate als Dispergiermittel enthalten.

Durch die Wahl des Dispergiermittels B ist es nun möglich, stabile wäßrige Amid-, Montan- oder Polyolefinwachsdispersionen mit den gewünschten Eigenschaften durch einfaches Einrühren des entsprechenden mikronisierten Wachses zusammen mit dem Dispergiermittel bei Raumtemperatur in Wasser zu erhalten. Es sind dabei Wachsgehalte bis zu 65 Gew.-% erreichbar. Die Wachse werden nach den üblichen Verfahren mikronisiert, wobei die mittlere Teilchengröße im Bereich 1 bis 50 µm liegt. Bei den Amidwachsen ist der Bereich von 1 bis 15 µm, bei den Montanwachsen der Bereich von 1 bis 40 µm und bei den Polyethylenwachsen der Bereich von 1 bis 20 µm besonders bevorzugt.

Zum Einsatz kommt beispielsweise ein Amidwachs, ein Syntheseprodukt aus Stearin-/Palmitinsäure und Ethylendiamin, wobei die Säurekomponente als Mischung aus 50-60 Gew.-% einer C₁₈-Kohlenstoffkette und 50-40 Gew.-% einer C₁₆-Kohlenstoffkette vorliegt. Dieses Wachs hat eine Säurezahl von 0 bis 15, vorzugsweise von 0 bis 8 mg KOH/g Wachs und eine Alkalizahl von 0 bis 3,5, vorzugsweise von 0 bis 2 mg HCl, berechnet als mg KOH/g Wachs.

Verwenden läßt sich beispielsweise auch mikronisiertes Montanwachs, wobei in Frage kommen
a) Säurewachse
b) Esterwachse aus Montansäure und einwertigen oder mehrwertigen Alkoholen (z.B. Fettalkohol, Ethandiol 1,2; Butandiol 1,3; Propandiol 1,2; Glycerin, Pentaerythrit, Trimethylolpropan und deren ethoxylierte Analoga
c) Mischungen aus Estern und Amiden
d) Mischungen aus obigen Esterwachsen und Alkali- oder Erdalkali-, vorzugsweise Na- oder Ca-Seifen der Montansäuren,
und wobei das mikronisierte Montanwachs eine Säurezahl von 0 bis 40, vorzugsweise von 0 bis 20 mg KOH/g Wachs aufweist.

Ebenfalls gut verwenden lassen sich beispielsweise nichtfunktionalisierte Polyethylenwachse mit einer Säurezahl von 0 sowie funktionalisierte Polyethylenwachse mit einer Säurezahl von 0 bis 19, vorzugsweise von 0 bis 10 mg KOH/g Wachs. Die gewichtsgemittelten Molekulargewichte liegen im Bereich von 500 bis 10.000 g/mol, insbesondere von 1.000 bis 5.000 g/mol. Der Gehalt an Polyethylen in diesen Wachsen beträgt vorteilhaft mehr als 99 Gew.-%.

Die erfindungsgemäßen wäßrigen Wachsdispersionen enthalten als Hauptkomponente 5 bis 65 Gew.-% des mikronisierten Wachses A und 0,01 bis 7, vorzugsweise 0,03 bis 5 Gew.-% des Dispergiermittels B. Besonders bevorzugt sind wäßrige Wachsdispersionen mit 20 bis 55 Gew.-% Amid- oder Montanwachs oder mit 20 bis 62 Gew.-% Polyethylenwachs. Auch beliebige Mischungen der drei Wachstypen untereinander sind möglich.

Bei dem Dispergiermittel B handelt es sich um wasserlösliche polymere Kohlenhydratderivate wie beispielsweise Cellulosederivate, Stärkeether wie z. B. Methylstärke, Kernmehlderivate wie Guar- oder Johannesbrotkernmehl. Der Begriff Kohlenhydratderivate im Sinne dieser Erfindung umfaßt auch andere Biopolymere wie Pectin, Gummi arabicum oder sonstige Polysacharide. Besonders bewährte Dispergiermittel sind wasserlösliche Cellulosederivate. Wasserlöslich im Sinne der Erfindung heißt, daß 0,01 bis 7 Gew.-% des Dispergiermittels sich in die wäßrige Wachsdispersion einarbeiten lassen.

Die als Dispergiermittel verwendeten Cellulosederivate sind beispielsweise wasserlösliche Celluloseether vom Typ alkylierte und/oder hydroxyalkylierte, nicht-ionische Alkylcellulose, Kurzbezeichnung AC bzw. AHAC. Geeignete Beispiele sind u.a. Hydroxyethylcellulose (HEC), Methylcellulose (MEC), Methylhydroxyethylcellulose (MHEC), Carboxymethylcellulose (CMC) oder Alkalicellulosen, insbesondere Natriumcarboxymethylcellulose (NACMC). Besonders bevorzugt sind Celluloseether vom Typ Alkylhydroxyalkylcellulose, deren Alkylkette aus 1 bis 3 C-Atomen besteht sowie Hydroxyethylcellulose und Natriumcarboxymethylcellulose.

Die Dispergiermittel haben verschiedene Viskositätsstufen und verschiedene Veretherungsgrade. Die Viskosität der wäßrigen Lösungen der Kohlenhydratderivate steht im engen Zusammenhang mit dem Polymerisationsgrad. Der Polymerisationsgrad wird durch die Anzahl der Grundbausteine im Makromolekül definiert. Je höher der Polymerisationsgrad, desto höher das Molekulargewicht und damit die verdickende Wirkung der Kohlenhydratderivate in wäßriger Lösung. Die Viskosität der Cellulosederivate wird an einer 2 Gew.-%igen wäßrigen Lösung im Höppler-Kugelfallviskosimeter bei + 20°C ermittelt. Die Viskositäten der hier eingesetzten handelsüblichen wasserlöslichen Cellulosederivate liegen je nach Polymerisationsgrad in 2 Gew.-%iger wäßriger Lösung zwischen 2 und 200.000 mPas (gemessen nach Höppler). Eine Methylhydroxyethylcellulose der Viskositätsstufe 50 mPas wird in der vorliegenden Anmeldung als 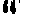 MHEC 50" bezeichnet.

Die Veretherung bewirkt die Überführung der unlöslichen Cellulose in ein wasserlösliches Derivat. Als Veretherungsgrad oder Durchschnittssubstitutionsgrad (DS) bezeichnet man die Anzahl der veretherten Hydroxylgruppen einer Anhydroglukoseeinheit.
Die zum Dispergieren des Wachses beschriebenen Cellulosederivate haben beispielsweise einen Veretherungsgrad von 0,1 bis 5, bevorzugt von 0,1 bis 3.

Die verschiedenen Typen der vorstehend beschriebenen Cellulosederivate können einzeln oder auch beliebig kombiniert zur Dispergierung des Wachses verwendet werden. Besonders bevorzugt sind Mischungen von Alkylhydroxyalkylcellulose mit anderen Celluloseethern.

Zusätzlich zu dem Dispergiermittel B können der wäßrigen Lösung Polyacrylsäuren mit Molgewicht um 2.000 bis 20.000 oder Polyphosphate mittlerer Kettenlänge, wasserdispergierbares Lecithin, wasserdispergierbare nichtionische Tenside der verschiedenen Ethoxilierungsstufen z.B. Polysorbat wie POE (20) Sorbitanmonooleat, -monostearat, -monopalmitat, -monolaurat, -tristearat, oder - trioleat, Fettalkoholpolyglykolether auf Basis Talgfett-, Isotridecylalkohol, Cocosfett-, Oleyl-, Stearylalkohol, Oxoalkohol sowie Nonylphenolpolyglykolether, ferner sogenannte anionische Tenside wie Alkansulfonat-Na, Olefinsulfonat-Na, Laurylalkoholethersulfat-Na, Ölsäuremethyltaurid-Na, Ölsäureisothionat-Na, Ölsäuresarkosid-Na oder Alkylphenolethersulfat-Na zugesetzt werden.

Die erfindungsgemäßen wäßrigen Polyolefinwachsdispersionen eignen sich sehr gut für die Herstellung von Auto-, Schuh-, Fußboden- und Steinpflegemitteln, Ziehmitteln, wäßrigen Holzlasuren, Druckfarben und Lacken, zur Lederbehandlung, in der Papierherstellung sowie als Trennmittel.

Die folgenden Beispiele dienen der Erläuterung der Erfindung und sind nicht einschränkend zu verstehen. Die Viskositäten der Wachsdispersionen nach Beispiel 1 bis 5 wurden mit einem Haake-Rotationsviskosimeter R 20 bei Raumtemperatur bestimmt. Alle Prozentangaben sind als Gew.-% zu verstehen.

### Beispiel 1

112,6 g einer 2,5 %igen wäßrigen Celluloseetherlösung vom Typ MHEC 50 (Tylose® MH 50, Hersteller Hoechst) werden vorgelegt. Unter intensivem Rühren werden 87,2 g mikronisiertes Polyethylenwachs mit Säurezahl 0 (Ceridust® 3620, Hersteller Hoechst) eingestreut und dispergiert. Die Dispersion ist homogen, gießbar und lagerstabil und hat eine Viskosität von 2.400 mPas.

### Beispiel 2

111,4 g einer 1,5 %igen wäßrigen Celluloseetherlösung vom Typ MHEC 300 (Tylopur® MH 300, Hersteller Hoechst) werden vorgelegt. Unter intensivem Rühren werden 88,6 g mikronisiertes Polyethylenwachs mit Säurezahl 0 (Ceridust® 3620, Hersteller Hoechst) eingestreut und dispergiert. Die Dispersion ist homogen, gießbar und lagerstabil und hat eine Viskosität von 1.400 mPas.

### Beispiel 3

1,68 g Celluloseether vom Typ MHEC 300 (Tylopur® MH 300, Hersteller Hoechst) und 0,56 g wasserdispergierbares Lecithin (Lipotin® NE, Hersteller Lucas Meyer, Hamburg) werden in 109,76 g Wasser bei Raumtemperatur gelöst. In diese Lösung werden unter intensivem Rühren 87,8 g mikronisiertes Polyethylenwachs mit Säurezahl 0 (Ceridust® 3620, Hersteller Hoechst) eingestreut und dispergiert. Die Dispersion ist homogen, gießbar und lagerstabil und hat eine Viskosität von 1.400 mPas.

### Beispiel 4

1,68 g Celluloseether vom Typ MHEC 300 (Tylopur® MH 300, Hersteller Hoechst) und 0,56 g POE (20) Sorbitanmonooleat (Radiasurf® 7157, Hersteller Fina Chemicals, Brüssel) werden in 109,76 g Wasser bei Raumtemperatur gelöst. In diese Lösung werden unter intensivem Rühren 87,8 g mikronisiertes Polyethylenwachs mit Säurezahl < 10 (Ceridust® 3715, Hersteller Hoechst) eingestreut und dispergiert. Die Dispersion ist homogen, gießbar und lagerstabil und hat eine Viskosität von 2.100 mPas.

### Beispiel 5

1,68 g Celluloseether vom Typ MHEC 300 (Tylopur® MH 300, Hersteller Hoechst) und 0,56 g wasserdispergierbares Lecithin (Lipotin® NE, Hersteller Lucas Meyer, Hamburg) werden in 109,76 g Wasser bei Raumtemperatur gelöst. In diese Lösung werden unter intensivem Rühren 87,8 g mikronisiertes Polyethylenwachs mit Säurezahl < 10 (Ceridust® 3715, Hersteller Hoechst) eingestreut und dispergiert. Die Dispersion ist homogen, gießbar und lagerstabil und hat eine Viskosität von 1.900 mPas.

### Beispiel 6

81,2 g einer 1,5 %igen wäßrigen Celluloseetherlösung vom Typ MHEC 50 (Tylose® MH 50, Hersteller Hoechst) werden vorgelegt. Unter intensivem Rühren werden 118,8 g Polyethylenwachs mit Säurezahl < 5 mg KOH/g Wachs (Luwax® AF 30, Hersteller BASF) eingestreut und dispergiert. Die Dispersion ist homogen, gießbar und lagerstabil.

### Beispiel 7

111,7 g einer wäßrigen Lösung enthaltend 0,84 g Celluloseether vom Typ MHEC (Tylopur® MH 300, Hersteller Hoechst) und 0,84 g Celluloseether NaCMC (Tylopur® C 600, Hersteller Hoechst) werden vorgelegt. In diese Lösung werden unter intensivem Rühren 88,3 g mikronisiertes Polyethylenwachs mit Säurezahl 0 (Ceridust® 3620, Hersteller Hoechst) eingestreut und dispergiert. Die Dispersion ist homogen, gießbar und lagerstabil.

### Beispiel 8

111,7 g einer wäßrigen Lösung enthaltend 0,84 g Celluloseether vom Typ MHEC (Tylopur® MH 300, Hersteller Hoechst) und 0,84 g Celluloseether HEC (Tylopur® H 300, Hersteller Hoechst) werden vorgelegt. In diese Lösung werden unter intensivem Rühren 88,3 g mikronisiertes Polyethylenwachs mit Säurezahl 0 (Ceridust® 3620, Hersteller Hoechst) eingestreut und dispergiert. Die Dispersion ist homogen, gießbar und lagerstabil.

### Beispiel 9

112,0 g einer wäßrigen Lösung enthaltend 1,12 g Celluloseether vom Typ MHEC (Tylopur® MH 300, Hersteller Hoechst) und 0,84 g Hydroxypropylstärke (Amitrolit® P 1 HV, Hersteller Agrana, 3950 Gmünd, Österreich) werden vorgelegt. In diese Lösung werden unter intensivem Rühren 88,0 g mikronisiertes Polyethylenwachs mit Säurezahl 0 (Ceridust® 3620, Hersteller Hoechst) eingestreut und dispergiert. Die Dispersion ist homogen, gießbar und lagerstabil.

### Beispiel 10

112,0 g einer wäßrigen Lösung enthaltend 1,12 g Celluloseether vom Typ MHEC (Tylopur® MH 300, Hersteller Hoechst) und 0,84 g Hydroxypropylstärke (Amitrolit® P 1 HV, Hersteller Agrana, 3950 Gmünd, Österreich) werden vorgelegt. In diese Lösung werden unter intensivem Rühren 88,0 g mikronisiertes Polyethylenwachs mit Säurezahl < 10 (Ceridust® 3715, Hersteller Hoechst) eingestreut und dispergiert. Die Dispersion ist homogen, gießbar und lagerstabil.

### Beispiel 11

112,6 g einer wäßrigen Lösung, enthaltend 1,683 g Celluloseether MHEC (= Tylopur® MH 1000 P, Hersteller Hoechst) und 0,563 g Sorbitanmonooleat 20 EO (= Radiasurf® 7157, Hersteller Fina, Brüssel), werden vorgelegt. Unter intensivem Rühren werden 87,2 g mikronisiertes Amidwachs (Ceridust 3910®, Hersteller Hoechst) zudosiert. Die Dispersion ist homogen, gießbar und lagerstabil. Die Viskosität beträgt 2700 mPas.

### Beispiel 12

113,2 g einer wäßrigen Lösung, enthaltend 1,698 g Celluloseether MHEC (= Tylopur® MH 300, Hersteller Hoechst) und 1,698 g Sorbitanmonooleat 20 EO (= Radiasurf® 7157, Hersteller Fina, Brüssel), werden vorgelegt. Unter intesivem Rühren werden 86,6 g mikronisiertes Amidwachs (Ceridust® 3910, Hersteller Hoechst) zudosiert. Die Dispersion ist homogen, gießbar und lagerstabil. Viskosität der Dispersion: 2400 mPas.

### Beispiel 13

113,8 g einer wäßrigen Lösung, enthaltend 2,276 g Celluloseether MHEC (= Tylose® MH 50, Hersteller Hoechst) und 1,707 g Sorbitanmonooleat 20 EO (= Radiasurf® 7157, Hersteller Fina, Brüssel), werden vorgelegt. Unter intensivem Rühren werden 86,0 g mikronisiertes Amidwachs (Ceridust® 3910, Hersteller Hoechst) zudosiert. Die Dispersion ist homogen, gießbar und lagerstabil. Viskosität der Dispersion: 2000 mPas.

### Beispiel 14

106 g einer 1 %igen wäßrigen Celluloseetherlösung MHEC 50 (Tylose® MH 50, Hersteller Hoechst) werden vorgelegt. Unter intensivem Rühren werden 94,0 g mikronisiertes Amidwachs (Mikropulver® PM, Hersteller Hoechst) zudosiert. Die Dispersion ist homogen, gießbar und lagerstabil.

### Beispiel 15

106 g einer 1 %igen wäßrigen Celluloseetherlösung MHEC 30 (Tylose® MH 300, Hersteller Hoechst) werden vorgelegt. Unter intensivem Rühren werden 94,0 g mikronisiertes Amidwachs (Mikropulver® PM, Hersteller Hoechst) zudosiert. Die Dispersion ist homogen, gießbar und lagerstabil.

### Beispiel 16

97,9 g einer wäßrigen Lösung enthaltend 1,46 g Celluloseether MHEC (= Tylose® MH 300, Hersteller Hoechst) und 1,46 g Sorbitanmonooleat 20 EO (= Radiasurf® 7157, Hersteller Fina, Brüssel), werden vorgelegt. Unter intensivem Rühren werden 102,1 g mikronisiertes Amidwachs (Ceridust® 3910, Hersteller Hoechst zudosiert.

### Beispiel 17

111,7 g einer wäßrigen Lösung, enthaltend 0,84 g Celluloseether MHEC (= Tylopur® MH 300, Hersteller Hoechst) und 0,84 g Celluloseether NaCMC (= Tylopur® C 600, Hersteller Hoechst) werden vorgelegt. Unter intensivem Rühren werden 88,3 g mikronisiertes Amidwachs (Ceridust® 3910, Hersteller Hoechst) zudosiert. Die Dispersion ist homogen, gießbar und lagerstabil.

### Beispiel 18

111,7 g einer wäßrigen Lösung, enthaltend 0,84 Celluloseether MHEC (= Tylopur® MH 300, Hersteller Hoechst) und 0,84 g Celluloseether HEC (= Tylose® H 300, Hersteller Hoechst) werden vorgelegt. Unter intensivem Rühren werden 88,3 g mikronisiertes Amidwachs (Ceridust® 3910, Hersteller Hoechst) zudosiert. Die Dispersion ist homogen, gießbar und lagerstabil.

### Beispiel 19

112,0 g einer wäßrigen Lösung, enthaltend 1,12 g Celluloseether vom Typ MHEC (= Tylopur® MH 300, Hersteller Hoechst) und 0,84 g Hydroxypropylstärke (= Amitrolit® P 1 HV, Hersteller Agrana, 3950 Gmünd, Österreich) werden vorgelegt. In diese Lösung werden unter intensivem Rühren 88,0 g mikronisiertes Amidwachs (Ceridust® 3910, Hersteller Hoechst) zudosiert. Die Dispersion ist homogen, gießbar und lagerstabil.

### Beispiel 20

111,2 g einer 1 %igen wäßrigen Celluloseetherlösung vom Typ MHEC (= Tylopur® MH 300, Hersteller Hoechst) werden vorgelegt. Unter intensivem Rühren werden 88,8 g mikronisiertes Montanwachs (Ceridust® 5551, Hersteller Hoechst) eingestreut und dispergiert. Die Dispersion ist homogen, gießbar und lagerstabil und hat eine Viskosität von 670 mPas.

### Beispiel 21

111,6 g einer 1,5 %igen wäßrigen Celluloseetherlösung vom Typ MHEC (= Tylopur® MH 300, Hersteller Hoechst) werden vorgelegt. Unter intensivem Rühren werden 88,3 g mikronisiertes Montanwachs (Ceridust® 5551, Hersteller Hoechst) eingestreut und dispergiert. Die Dispersion ist homogen, gießbar und lagerstabil und hat eine Viskosität von 1900 mPas.

### Beispiel 22

111,7 g einer wäßrigen Lösung, enthaltend 0,84 g Celluloseether MHEC (= Tylopur® MH 300, Hersteller Hoechst) und 0,84 g Celluloseether NaCMC (= Tylopur® C 30, Hersteller Hoechst) werden vorgelegt. Unter intensivem Rühren werden 88,3 g mikronisiertes Montanwachs (Ceridust® 5551, Hersteller Hoechst) zudosiert. Die Dispersion ist homogen, gießbar und lagerstabil.

### Beispiel 23

111,7 g einer wäßrigen Lösung, enthaltend 0,84 g Celluloseether MHEC (= Tylopur® MH 300, Hersteller Hoechst) und 0,84 g Celluloseether HEC (= Tylose® H 300, Hersteller Hoechst) werden vorgelegt. Unter intensivem Rühren werden 88,3 g mikronisiertes Montanwachs (Ceridust® 5551, Hersteller Hoechst) zudosiert. Die Dispersion ist homogen, gießbar und lagerstabil.

### Beispiel 24

112,0 g einer wäßrigen Lösung, enthaltend 1,12 g Celluloseether vom Typ MHEC (= Tylopur® MH 300, Hersteller Hoechst) und 0,84 g Hydroxypropylstärke (Amitrolit® P 1 HV, Hersteller Agrana, 3950 Gmünd, Österreich), werden vorgelegt. In diese Lösung werden unter intensivem Rühren 88,0 g mikronisiertes Montanwachs (Ceridust® 5551, Hersteller Hoechst) eingestreut und dispergiert. Die Dispersion ist homogen, gießbar und lagerstabil.

## Patentansprüche

1. Stabile wäßrige Wachsdispersion, enthaltend
A) 5 bis 65 Gew.-% mikronisiertes Wachs und
B) 0,01 bis 7, vorzugsweise 0,03 bis 5 Gew.-% polymere Kohlenhydratderivate als Dispergiermittel.

2. Stabile wäßrige Wachsdispersion nach Anspruch 1, dadurch gekennzeichnet, daß es sich bei dem Wachs um Amid-, oder Montan- oder Polyethylenwachs oder um Mischungen davon handelt.

3. Stabile wäßrige Wachsdispersion nach Anspruch 1 oder 2, dadurch gekennzeichnet, daß das Wachs eine mittlere Teilchengröße von 1 bis 50 µm aufweist.

4. Stabile wäßrige Wachsdispersion nach einem der Ansprüche 1 bis 3, dadurch gekennzeichnet, daß das Amidwachs eine mittlere Teilchengröße von 1 bis 15 µm aufweist.

5. Stabile wäßrige Wachsdispersion nach einem der Ansprüche 1 bis 4, dadurch gekennzeichnet, daß das Amidwachs eine Säurezahl von 0 bis 15, vorzugsweise von 0 bis 8 aufweist.

6. Stabile wäßrige Wachsdispersion nach einem der Ansprüche 1 bis 5, dadurch gekennzeichnet, daß das Amidwachs eine Alkalizahl von 0 bis 3,5, insbesondere von 0 bis 2 aufweist.

7. Stabile wäßrige Wachsdispersion nach einem der Ansprüche 1 bis 3, dadurch gekennzeichnet, daß das Montanwachs eine mittlere Teilchengröße von 1 bis 40 µm aufweist.

8. Stabile wäßrige Wachsdispersion nach einem der Ansprüche 1 bis 3 und 7, dadurch gekennzeichnet, daß das Montanwachs eine Säurezahl von 0 bis 40, vorzugsweise von 0 bis 20, aufweist.

9. Stabile wäßrige Wachsdispersion nach einem der Ansprüche 1 bis 3, dadurch gekennzeichnet, daß das Polyethylenwachs eine mittlere Teilchengröße von 1 bis 20 µm aufweist.

10. Stabile wäßrige Wachsdispersion nach einem der Ansprüche 1 bis 3 und 9, dadurch gekennzeichnet, daß das Wachs ein funktionalisiertes Polyethylenwachs mit einer Säurezahl von 0 bis 19, insbesondere von 0 bis 10, ist.

11. Stabile wäßrige Wachsdispersion nach einem der Ansprüche 1 bis 3 und 9, dadurch gekennzeichnet, daß das Wachs ein nichtfunktionalisiertes Polyethylenwachs mit einer Säurezahl von 0 ist.

12. Stabile wäßrige Wachsdispersion nach einem der Ansprüche 1 bis 11, dadurch gekennzeichnet, daß darin 20 bis 55 Gew.-% Amid- oder Montanwachs enthalten sind.

13. Stabile wäßrige Wachsdispersion nach einem der Ansprüche 1 bis 11, dadurch gekennzeichnet, daß darin 20 bis 62 Gew.-% Polyethylenwachs enthalten sind.

14. Stabile wäßrige Wachsdispersion nach einem der Ansprüche 1 bis 13, dadurch gekennzeichnet, daß die Komponente B aus Celluloseether oder Stärkeether oder Kernmehlderivaten oder Mischungen davon besteht.

15. Stabile wäßrige Wachsdispersion nach Anspruch 14, dadurch gekennzeichnet, daß der Celluloseether eine Alkylhydroxyalkylcellulose oder eine Mischung davon mit anderen Celluloseethern ist, wobei Alkyl vorzugsweise C₁ bis C₃ ist.

16. Stabile wäßrige Wachsdispersion nach Anspruch 14 oder 15, dadurch gekennzeichnet, daß der Celluloseether einen Veretherungsgrad von 0,1 bis 5 und die Viskositätsstufe 2 bis 200.000 mPas aufweist.

17. Verwendung von stabilen wäßrigen Wachsdispersionen gemäß den Ansprüchen 1 bis 16 für die Herstellung von Auto-, Schuh-, Fußboden- und Steinpflegemitteln, Ziehmitteln, wäßrigen Holzlasuren, Druckfarben und Lacken, zur Lederbehandlung, in der Papierherstellung sowie als Trennmittel.
